# FASCICULE DE BREVET EUROPEEN

(11) **EP 2 602 659 B1**
(45) Date de publication et mention de la délivrance du brevet: **08.02.2017**
(21) Numéro de dépôt: 12196182.5
(22) Date de dépôt: 07.12.2012
(51) Int. Cl.: G03B 15/06

(54) **Dispositif de support éclaire et ensemble pour la prise de vues d'un objet ou d'un sujet**
Beleuchtete Halterungsvorrichtung, und Einheit zur Bildaufnahme von einem Objekt oder einem Subjekt
Illuminated supporting device and assembly for photographing an object or a person

(30) Priorité: 07.12.2011 FR 1161276
(43) Date de publication de la demande: 12.06.2013
(73) Titulaire: ALTAWAK, 75020 Paris (FR)
(72) Inventeur: Gras, Philippe, 77320 La Ferté-Gaucher (FR)
(74) Mandataire: Wagret, Frédéric

(56) Documents cités:
- EP-A1- 2 369 409
- WO-A1-03/050790
- WO-A1-2004/114681
- FR-A3- 2 562 407
- US-A- 6 106 124

## Description

L'invention est relative à un dispositif de support éclairé sur lequel est déposé un objet ou un sujet destiné à être photographier ou filmer.

Le terme « objet » est essentiellement employé par la suite. Toutefois, l'invention s'applique également à un individu.

L'invention concerne également un ensemble pour la prise de vues, du type studio photo ou boîte à lumière, comprenant un tel dispositif de support.

L'invention vise plus particulièrement, sans toutefois y être limitée, l'utilisation d'un dispositif de support éclairé pour la représentation photographique sur écran de visualisation. Elle peut s'appliquer à toute capture d'images, y compris pour la représentation de ces images sur un support d'impression.

Depuis quelques années, des systèmes sont apparus sur le marché pour réaliser rapidement et simplement des visualisations ou des animations d'objets sur écran d'ordinateur. De tels dispositifs permettent de capturer des images d'un objet et, en les traitant par un logiciel adapté, de visualiser ledit objet sur un écran et de préférence de manière animée.

Ces dispositifs sont conçus pour une utilisation aisée et rapide par tout public. L'objet pris en photo est ainsi reproduit quasi-instantanément sur l'écran de l'ordinateur, la représentation étant utilisable aussitôt pour être par exemple mis en ligne sur Internet, en particulier sur des sites de commerce à distance.

De tels dispositifs utilisent de manière connue une boîte à lumière (ou caisson lumineux) dans lequel est placé l'objet à reproduire sur écran, la boîte étant connectée à l'ordinateur équipé du logiciel idoine.

La boîte à lumière sous forme d'enceinte fermée comporte un éclairage et facultativement un plateau tournant sur lequel est agencé l'objet à photographier sous 360°. Des moyens de prises de vue, tel qu'un appareil photographique, sont associés à la boîte, soit à l'intérieur de celle-ci, soit à l'extérieur en étant alors mis en oeuvre au travers d'une porte ou trappe laissée ouverte sur l'un des côtés de la boîte. Une boîte à lumière dotée d'un plateau tournant, de moyens d'éclairage et d'un appareil de prise de vues est par exemple décrite dans le brevet US 6 106 124. Une autre boîte à lumière conventionelle est divulguée par FR 2 562 407.

La mise en lumière de l'objet est fournie par une ou plusieurs sources d'éclairage placées à l'intérieur de la boîte et commandées manuellement par des interrupteurs ou variateurs d'intensité, ou bien pilotées électroniquement à partir de l'ordinateur.

L'éclairage et le fond sur lequel est photographié l'objet sont déterminants pour obtenir une image avec un fond blanc et sans zones d'ombre.

Il est usuel d'utiliser un support pour l'objet qui soit rétro-éclairé combiné à un fond pour la boîte à lumière qui est blanc ou rétro-éclairé, ce qui procure une visualisation de l'objet sur écran avec un fond parfaitement blanc et ne nécessite donc aucune retouche ni détourage de l'objet visualisé sur l'écran.

Cette mise en oeuvre est efficace pour des objets de couleur mate.

Cependant, elle présente des inconvénients pour les objets brillants ou engendrant des reflets. En effet, lorsque la surface de l'objet est brillante, la lumière blanche émise par le support rétro-éclairé se reflète sur l'objet et donne une impression sur l'image obtenue de surface laiteuse qui dénature la texture et la perception de la matière de l'objet. En particulier, cette technique d'obtention de fond blanc par un support rétro-éclairé est inadapté pour la prises de vues de bouteilles de vins, flacons, objets en inox ou chromés, etc...

L'invention a donc pour but de fournir un dispositif de support éclairé qui ne présente pas les inconvénients précités et qui procure une image à fond parfaitement blanc, en particulier pour les objets réfléchissants.

Dans la suite de la description le terme de « hauteur », les qualificatifs « supérieur », « inférieur », « haut » et « bas » d'un élément du dispositif sont utilisés dans le cadre d'une installation normale du dispositif, c'est-à-dire relatif à une notion verticale par rapport à un sol plat horizontal sur lequel il serait posé.

Selon l'invention, le dispositif de support éclairé pour objet ou sujet destiné à être photographier, est conforme à la revendication 1.

Le dispositif de l'invention permet ainsi de supprimer tout risque de réflexion par l'objet de la lumière émise depuis ledit dispositif, et procure sur l'image produite, une zone sous et autour de l'objet parfaitement blanche.

De plus, la surélévation permet de cadrer l'objet à photographier sans visualiser le plancher, assurant d'obtenir un fond homogène blanc.

Selon une caractéristique, le dispositif comporte des moyens d'éclairage logés dans la paroi du corps longiligne ou à l'intérieur du corps, celui-ci étant creux.

De préférence, la plate-forme présente une section dans un plan transversal au corps longiligne qui recouvre la totalité de la section du corps longiligne.

Avantageusement, le corps longiligne forme un cylindre à section circulaire, semi-circulaire, ovale, ou polygonale, ou toute autre géométrie. Le corps peut ne pas présenter une section constante selon toute sa hauteur (axe longitudinal).

Dans une variante de réalisation, le corps longiligne est creux et sa paroi est fermée longitudinalement par un profilé portant des moyens d'éclairage sur sa face en regard de l'intérieur du corps.

Préférentiellement, la plate-forme est amovible de sorte à être interchangeable pour être adaptée aux dimensions de l'objet à poser, la plate-forme présentant une section de dimensions inférieures à celles de la surface de la base de l'objet.

La plate-forme peut présenter une surface dont le contour est spécifiquement conçu pour être destiné à correspondre au contour de l'objet ou partie de l'objet/sujet à porter.

Dans un mode de réalisation, selon l'application envisagée, le moyen de support et surélévation est associé à un plateau tournant.

L'invention a également trait à un ensemble conforme aux revendications independantes 8-10.

La hauteur du corps longiligne est préférentiellement adaptée de sorte qu'aucune partie du plancher n'apparaisse dans le cadrage de la prise de vue, compte tenu de l'angle de cette prise de vue et de la distance séparant la plate-forme du fond blanc.

L'ensemble peut comprendre plusieurs dispositifs selon l'invention, en particulier un socle étant mis au droit de chaque surface de contact du ou des objets devant reposer sur un plan horizontal.

La plate-forme peut présenter une surface dont le contour est spécifiquement conçu pour correspondre ou être juste inférieur au contour de l'objet ou partie de l'objet/sujet à porter. Ainsi, il est possible de fabriquer une ou des plates-formes sur mesure pour s'adapter parfaitement à la forme et dimensions de la base de l'objet/sujet à supporter par un ou plusieurs socles.

Le dispositif ou l'ensemble ci-dessus est utilisé conformement à la revendication independante 14.

La présente invention est maintenant décrite à l'aide d'exemples uniquement illustratifs et nullement limitatifs de la portée de l'invention, et à partir des illustrations ci-jointes, dans lesquelles :
- La figure 1 représente une vue schématique de côté d'un dispositif de support de l'invention intégré à un ensemble pour prises de vue;
- La figure 2 illustre une vue de face du dispositif de l'invention ;
- La figure 3 illustre une vue de face d'une variante du dispositif sur lequel est agencée une bouteille ;
- La figure 4 illustre une autre variante de dispositif de l'invention.

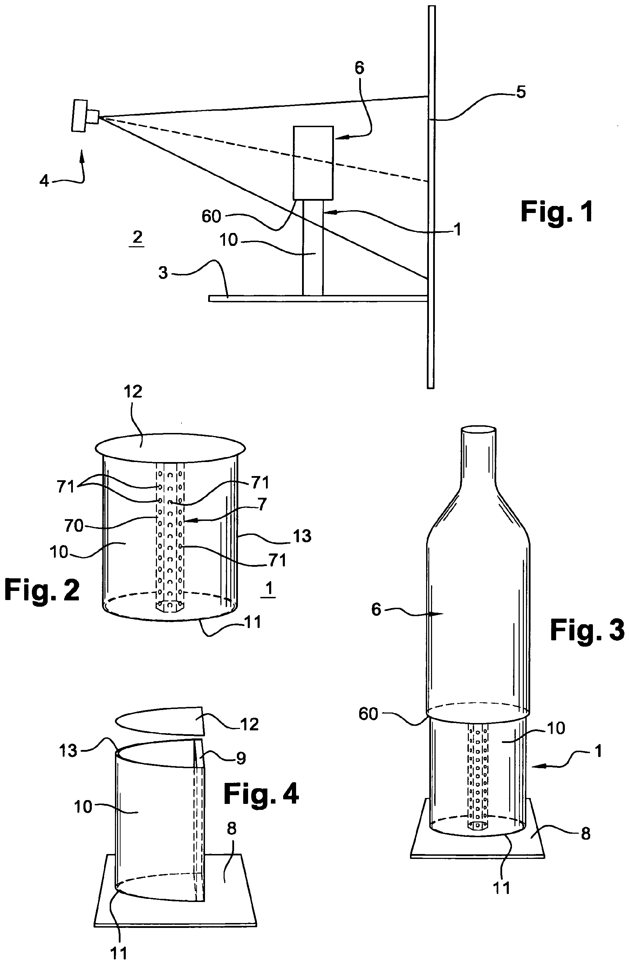

Le dispositif de support éclairé 1 de l'invention illustré sur les figures 1 à 4 est destiné à être intégré, en regard de la figure 1, à un ensemble 2 pour prises de vues du type studio photo ou boîte à lumière.

L'ensemble 2 comporte un plancher 3 sur lequel est posé le dispositif de support 1, des moyens de prises de vues 4, tels qu'un appareil photo, un fond 5 qui est vertical, perpendiculaire au plancher, et agencé derrière le dispositif de support, à l'opposé des moyens de prises de vue.

Le fond 5 est de manière usuelle rétro-éclairé et à surface blanche.

Un objet ou un sujet 6, destiné à être photographié par les moyens de prises de vue 4, est posé sur le support 1.

Le dispositif de support 1 constitue un socle éclairé sur lequel est agencé l'objet 6 destiné à être photographié.

Le dispositif de l'invention assure, lorsque l'objet est réfléchissant, de supprimer lors de la prise de vue, la visualisation de cet effet réfléchissant.

La figure 3 illustre à titre d'exemple le support d'une bouteille en verre 6.

En outre, le dispositif 1 associé au fond blanc 5, procure un rendu d'image sur un fond parfaitement blanc sans ombres.

En regard de la figure 2, le socle 1 de l'invention comporte un corps longiligne 10 pourvu d'une embase 11 destinée à reposer sur le plancher 3, et d'une plate-forme 12 à l'extrémité distale opposée de l'embase et destinée à porter l'objet.

Selon l'invention, le dispositif procure une élévation de l'objet par rapport au plancher. La hauteur du corps longiligne est adaptée afin qu'aucune partie du plancher 3 n'apparaisse dans le cadrage de la prise de vue, compte tenu de l'angle de cette prise de vue et de la distance séparant l'objet 6 du fond blanc 5.

Ainsi, en tenant compte de la distance séparant le socle 1, destiné à porter l'objet, du fond 5, ainsi que de l'angle de la caméra par rapport à l'horizontal, la hauteur du socle sera adaptée de sorte qu'aucune zone du plancher 3 ne soit dans l'angle de la pise de vue.

Le fond 5 peut être vertical, incliné ou courbe avec éventuellement une partie horizontale.

Le fond 5 vertical descend de préférence jusqu'au plancher 3. Il peut en variante descendre plus bas que le plancher sous réserve qu'un espace soit laissé ouvert au niveau du plancher. Il peut dans une autre variante être d'une hauteur s'arrêtant au dessus du plancher, mais alors sa grandeur (sa hauteur) doit être telle que la totalité de l'arrière-plan de la prise de vue est exclusivement contenue dans une surface appartenant au fond 5.

Le fond 5 est blanc. Sa couleur est obtenue par un rétro-éclairage ou un éclairage direct latéral.

Le corps 10 est cylindrique et présente une section de toute forme géométrique. Ici, la section représentée est circulaire. Elle est par contre semi-circulaire sur la figure 4. En variante, elle peut être ovale ou polygonale.

L'embase du socle est posée sur le plancher en y étant solidaire ou non. La fixation est essentiellement fonction du type d'objet à supporter, en raison en particulier de son poids.

Une pièce d'interface plane 8 (figure 3) peut être solidaire de l'embase 11 du socle aidant à la stabilité du dispositif. Le dispositif est posé sur le plancher 3 via cette pièce. La pièce 8 présente une superficie au moins égale à la projection de la plate-forme sur un plan coplanaire à l'embase 11.

En cas de fixation du dispositif 1 au plancher 3 via directement l'embase 11 ou via la pièce d'interface 8, cette fixation est réalisée par tous moyens connus, de préférence amovibles, par exemple des vis ou des moyens d'attache du type bande auto-agrippante telle que connue sous la marque Velcro®, ou des moyens de clipsage, ou encore par des moyens de coopération mutuelle du type mâle femelle.

Les moyens de clipsage ou d'attache sont agencés sur la face de l'embase en regard du plancher, tandis que les vis traversent l'épaisseur de l'embase, leur accès étant assuré à partir de l'intérieur du socle qui est alors creux et depuis le haut en ayant retiré préalablement la plate-forme 12.

Selon l'invention, le plancher 3 ou la pièce d'interface 8 est de couleur mate, c'est-à-dire non réfléchissante, et de préférence de couleur sombre telle que noir ou gris.

Selon l'invention, le corps 10, au moins au niveau de sa paroi 13, est éclairant et diffusant. A cet effet, le socle comporte des moyens d'éclairage 7 visibles par transparence sur la figure 2 et des moyens diffusants tels qu'ils fournissent un éclairage homogène dans toutes les directions de l'espace.

De préférence, le corps 10 est creux pour loger les moyens d'éclairage 7. Ces moyens d'éclairage forment par exemple une colonne 70 s'étendant selon la hauteur du corps 10 et dotée d'une multitude de diodes électroluminescentes 71 agencées sur l'ensemble de la périphérie de la colonne.

En variante, les moyens d'éclairage sont par exemple, sans présenter de caractère limitatif, des tubes fluorescents ou des diodes électroluminescentes.

Dans un mode de réalisation, les moyens d'éclairage 7 possèdent une puissance lumineuse variable afin d'adapter l'éclairage produit par le socle 1 aux conditions d'éclairage direct de l'objet.

Concernant l'agencement des moyens d'éclairage 7, ceux-ci pourraient être logés dans la paroi même du corps 10 ou en regard de la tranche de la paroi du corps (non illustré).

Dans le mode de réalisation de la figure 4, la paroi 13 du corps 10 présente une section circulaire tronquée en étant obturée verticalement par un profilé 9, la face 90 du profilé, en regard de l'intérieur du corps, étant destinée à porter les moyens d'éclairage 7.

Les moyens diffusants du corps 10 du dispositif sont associés à tout ou partie de l'ensemble de la périphérie de la paroi 13 du corps 10 en fonction de la forme et de la constitution de la paroi. La diffusion de la lumière doit être suffisante et homogène dans l'espace afin de procurer sur l'image obtenue de l'objet une zone totalement blanche sous l'objet.

La paroi 13 est transparente à fonction diffusante ou est translucide.

Les moyens diffusants peuvent être rapportés contre la paroi 13 ou être constitués par le matériau de fabrication de la paroi.

La paroi est par exemple en verre, ou en matière plastique du type polyméthacrylate de méthyle (PMMA), polychlorure de vinyle (PVC), polycarbonate, polyéthylène.

Avantageusement, la plate-forme 12 du dispositif est amovible afin d'être interchangeable en fonction de la base surfacique 60 de l'objet à porter.

Elle est juste posée sur le corps 10 ou de préférence est rapportée en étant emboitée ou fixée par clipsage ou autre moyen équivalent du type moyens de coopération mutuelle mâle-femelle.

La plate-forme 12 est constituée d'une plaque pleine, en tôle, en acier inoxydable, en aluminium ou en matière plastique rigide. Elle est de faible épaisseur pour ne pas être visible sur la photographie. De préférence, son épaisseur est comprise entre 0,5 et 1 mm.

L'aire de la plate-forme 12 est inférieure à la surface de la base 60 de l'objet 6 de sorte que ladite base de l'objet recouvre la plate-forme 12 (figures 1 et 3). Sur la figure 3, le cul 60 de la bouteille 6 couvre l'ensemble de la surface de la plate-forme 12.

La plate-forme 12 présente une géométrie et une taille surfacique adaptées à l'objet à photographier.

Ainsi, selon l'invention :
- le socle 1 constitue par sa forme longiligne un moyen de surélévation de l'objet par rapport au plancher de manière à ne pas visualiser le plancher lors de la prise de vue;
- la surface 60 de la base de l'objet recouvre la plate-forme 12 du socle ;
- le socle présente un éclairage diffusant sur l'ensemble de sa paroi périphérique.

De cette façon, l'image obtenue de l'objet photographié est telle que le corps longiligne 10 est invisible et que la zone disposée sous l'objet est parfaitement blanche, de même que le fond à l'arrière de l'objet, en raison du fond blanc 5.

Le dispositif de l'invention sera adapté lorsque l'objet en contact avec la plate-forme 12 ne présente pas une surface continue d'application, mais une pluralité de surfaces distinctes et non aboutées les unes aux autres, par exemple lorsqu'un individu est placé sur la plate-forme et y est en contact par ses deux pieds (ses chaussures).

Dans cette configuration, deux solutions sont envisagées :
1) l'utilisation de plusieurs dispositifs de l'invention, un socle (donc sa plate-forme) étant mis au droit de chaque surface de contact (de chaque chaussure, voire de chaque semelle et chaque talon lorsque la chaussure est à talon haut), ou bien
2) l'utilisation d'une plate-forme dont la surface serait minimale pour juste englober la totalité des multiples surfaces de contact. Dans ce cas, la plate-forme sera blanche ou rétro-éclairante, le risque de reflets par les zones de la plate-forme non recouvertes par les chaussures ou autres éléments en contact étant très limité en comparaison à un système usuel de plancher rétro-éclairé.

En fonction du type de prises de vues qui est effectué, en particulier lorsqu'il s'agit de réaliser une pluralité de prises de vue de l'objet 6 en rotation ou une vidéo de l'objet, le dispositif de l'invention est associé à un plateau tournant. Le plateau tournant peut constituer la pièce d'interface 8 ou bien constituer ou être rapporté sur la plate-forme 12. S'il s'agit de la plate-forme 12 qui tourne, la motorisation peut être intégrée au socle 1 ou à l'interface 8, un axe de transmission reliant l'interface 8 à la plate-forme 12.

En outre, le plateau tournant est avantageusement doté d'un collecteur tournant pour son association aux moyens de prises de vues.

## Revendications

1. Dispositif de support éclairé pour objet ou sujet à photographier ou filmer, comportant un moyen de support et surélévation éclairé comprenant un corps longiligne (10), une embase (11) associée à l'une des extrémités distales du corps, et une plate-forme (12), le corps longiligne présentant une paroi (13) éclairante et diffusante, **caractérisé en ce que** le corps longiligne (10) s'étend en hauteur, la plate-forme (12) est disposée sur l'autre extrémité distale du corps longiligne, à l'opposé de l'embase (11), la plate-forme possédant une surface adaptée à être inférieure ou égale à la base surfacique de l'objet destiné à être posé sur ladite plate-forme de sorte que ladite base de l'objet recouvre la plate-forme, et **en ce que** le corps longiligne s'étendant en hauteur (10) contient des moyens d'éclairage formant une colonne (70).

2. Dispositif selon la revendication 1, **caractérisé en ce qu'**il comporte des moyens d'éclairage (7) logés dans la paroi du corps longiligne ou à l'intérieur du corps, celui-ci étant creux.

3. Dispositif selon la revendication 1 ou 2, **caractérisé en ce que** la plate-forme (12) présente une section dans un plan transversal au corps longiligne qui recouvre la totalité de la section du corps longiligne.

4. Dispositif selon l'une quelconque des revendications précédentes, **caractérisé en ce que** le corps longiligne est creux et sa paroi (13) est fermée longitudinalement par un profilé (9) portant des moyens d'éclairage (7) sur sa face en regard de l'intérieur du corps.

5. Dispositif selon l'une quelconque des revendications précédentes, **caractérisé en ce que** la plate-forme (12) est amovible.

6. Dispositif selon l'une quelconque des revendications précédentes, **caractérisé en ce que** la plate-forme présente une surface dont le contour est destiné à correspondre au contour de l'objet ou partie de l'objet/sujet à porter.

7. Dispositif selon l'une quelconque des revendications précédentes, **caractérisé en ce que** le moyen de support et surélévation est associé à un plateau tournant.

8. Ensemble (2) pour la prise de vues, comprenant un dispositif (1) selon l'une quelconque des revendications 1-7 précédentes, un plancher (3) sur lequel est posé le dispositif, le plancher étant de couleur mate.

9. Ensemble (2) pour la prise de vues, comprenant un dispositif (1) selon l'une quelconque des revendication 1-7 précédentes, un plancher (3) sur lequel est posé le dispositif et une pièce d'interface (8) entre le plancher et le dispositif, la pièce d'interface étant de couleur mate.

10. Ensemble comprenant un dispositif (1) selon l'une quelconque des revendications 1 à 7 ou ensemble selon les revendication 8-9, **caractérisé en ce qu'**il comprend un fond (5) qui est perpendiculaire au plancher (3) sur lequel repose l'embase (11) et qui est agencé à distance du dispositif (1) et destiné à être opposé à des moyens de prise de vue (4), le fond étant de couleur blanche.

11. Ensemble selon la revendication précédente, **caractérisé en ce que** la hauteur du corps longiligne (10) est adaptée de sorte qu'aucune partie du plancher n'apparaisse dans le cadrage de la prise de vue, compte tenu de l'angle de cette prise de vue et de la distance séparant la plate-forme (12) du fond blanc.

12. Ensemble selon la revendication 9, **caractérisé en ce que** la pièce d'interface (8) présente une superficie au moins égale à la projection de la plate-forme (12) sur un plan coplanaire à l'embase.

13. Ensemble selon l'une des revendications 9 à 12, **caractérisé en ce qu'**il comprend plusieurs dispositifs (1), en particulier un socle (10) étant mis au droit de chaque surface de contact du ou des objets devant reposer sur un plan horizontal.

14. Utilisation du dispositif ou ensemble selon l'une quelconque des revendications précédentes, avec des moyens de prises de vue, dans une boîte à lumière ou dans un studio photo.

## Patentansprüche

1. Beleuchtete Haltevorrichtung für zu fotografierende oder zu filmende Personen oder Gegenstände, mit einem beleuchteten Mittel zum Halten und Höherstellen, das einen länglichen Körper (10) umfasst, sowie mit einem Sockel (11), der einem der distalen Enden des Körpers zugeordnet ist, und einer Plattform (12), wobei der längliche Körper eine beleuchtende und Licht ausstrahlende Wand (13) aufweist, **dadurch gekennzeichnet, dass** sich der längliche Körper (10) in der Höhe erstreckt, die Plattform (12) ist am anderen distalen Ende des länglichen Körpers dem Sockel (11) gegenüberliegend angebracht, wobei die Platform eine Fläche besitzt, die weniger oder gleich als die Grundfläche des auf die Plattform zu stellenden Gegenstands beträgt, sodass diese Grundfläche des Gegenstands die Plattform abdeckt, und dadurch, dass der längliche Körper, der sich in der Höhe (10) erstreckt, Beleuchtungsmittel enthält, die eine Säule (70) bilden.

2. Vorrichtung nach Anspruch 1, **dadurch gekennzeichnet, dass** sie Beleuchtungsmittel (7) umfasst, die in der Wand des länglichen Körpers oder direkt im Körper selbst, der hohl ist, untergebracht sind.

3. Vorrichtung nach Anspruch 1 oder 2, **dadurch gekennzeichnet, dass** die Plattform (12) einen zum länglichen Körper querliegenden Querschnitt aufweist, der den gesamten Querschnitt des länglichen Körpers abdeckt.

4. Vorrichtung nach einem der vorausgehenden Ansprüche, **dadurch gekennzeichnet, dass** der längliche Körper hohl ist und seine Wand (13) in der Länge durch ein Profilteil (9), das auf der zum Innenraum des Körpers gerichteten Seite Beleuchtungsmittel (7) umfasst, geschlossen ist.

5. Vorrichtung nach einem der vorausgehenden Ansprüche, **dadurch gekennzeichnet, dass** die Plattform (12) abnehmbar ist.

6. Vorrichtung nach einem der vorausgehenden Ansprüche, **dadurch gekennzeichnet, dass** die Plattform eine Fläche aufweist, deren Umriss dazu bestimmt ist, mit dem Umriss des/der zu tragenden Gegenstands/Person oder einem Teil davon übereinzustimmen.

7. Vorrichtung nach einem der vorausgehenden Ansprüche, **dadurch gekennzeichnet, dass** das Mittel zum Halten und Höherstellenmit einer Drehplatte verbunden ist.

8. Einheit (2) für die Bildaufnahme, eine Vorrichtung (1) nach einem der vorausgehenden Ansprüche (1-7) und einen Boden (3) umfassend, auf den die Vorrichtung gestellt wird, wobei der Boden mattfarbig ist.

9. Einheit (2) für die Bildaufnahme, eine Vorrichtung (1) nach einem der vorausgehenden Ansprüche (1-7), einen Boden (3), auf den die Vorrichtung gestellt wird, und zwischen dem Boden und der Vorrichtung ein Schnittstellenteil (8) umfassend, wobei das Schnittstellenteil mattfarbig ist.

10. Einheit mit einer Vorrichtung (1) nach einem der vorausgehenden Ansprüche 1 bis 7 oder. Einheit nach den Ansprüchen 8-9, **dadurch gekennzeichnet, dass** sie einen Hintergrund (5) umfasst, der zum Boden (3) senkrecht steht, auf den der Sockel (11) aufliegt und der entfernt von der Vorrichtung (1) angeordnet und dazu bestimmt ist, den Mitteln zur Bildaufnahme (4) gegenüberliegend angebracht zu werden, wobei der Hintergrund weiß ist.

11. Einheit nach dem vorausgehenden Anspruch, **dadurch gekennzeichnet, dass** die Höhe des länglichen Körpers (10) derart angepasst ist, dass kein Teil des Bodens im Rahmen der Bildaufnahme erscheint, wobei der Winkel dieser Bildaufnahme und die Distanz zwischen der Plattform (12) und dem weißen Hintergrund berücksichtigt werden.

12. Einheit nach Anspruch 9, **dadurch gekennzeichnet, dass** das Schnittstellenteil (8) mindestens eine genauso große Oberfläche aufweist wie die Projektion der Plattform (12) auf eine zum Sockel komplanare Ebene.

13. Einheit nach einem der Ansprüche 9 bis 12, **dadurch gekennzeichnet, dass** sie mehrere Vorrichtungen (1) umfasst, wobei insbesondere ein Sockel (10) vor jeder Kontaktfläche der/des Gegenstände/Gegenstands, die/der auf einer waagrechten Ebene liegen müssen/muss, angebracht wird.

14. Anwendung der Vorrichtung oder Einheit nach einem der vorausgehenden Ansprüche, mit Bildaufnahmemitteln, in einem Beleuchtungsgehäuse oder in einem Fotostudio.

## Claims

1. An illuminated support device for an object or subject to be photographed or filmed, comprising an illuminated support and raising means comprising a long body (10), a base (11) associated with one of the distal ends of the body, and a platform (12), wherein the long body has an illuminating and diffusing wall (13), **characterized in that** the long body (10) extends in height, the platform (12) is placed on the other distal end of the long body opposite the base (11), wherein the platform has a surface that is smaller than or equal to the surface of the base of the object to be placed on said platform so that said base of the object covers the platform and the long body extending in height (10) contains lighting means that form a column (70).

2. A device according to claim 1, **characterized in that** it comprises lighting means (7) placed in the wall of the long body or inside the body, which is hollow.

3. A device according to claim 1 or 2, **characterized in that** the platform (12) has a section in a plane transversal to the long body that covers the totality of the section of the long body.

4. A device according to any of the preceding claims, **characterized in that** the long body is hollow and its wall (13) is longitudinally closed by a section (9) with lighting means (7) on its surface opposite the inside of the body.

5. A device according to any of the preceding claims, **characterized in that** the platform (12) is removable.

6. A device according to any of the preceding claims, **characterized in that** the platform has a surface with a contour that is designed to correspond with the contour of the object or part of the object/subject to carry.

7. A device according to any of the preceding claims, **characterized in that** the support and raising means is associated with a rotating table.

8. An assembly (2) for photographing or filming, comprising a device (1) according to any of the preceding claims, a floor (3) on which the device is placed, wherein the floor is matte in color.

9. An assembly (2) for photographing or filming, comprising a device (1) according to any of the claims 1 to 7, a floor (3) on which the device is placed and an interface part (8) between the floor and the device, wherein the interface part is matte in color.

10. An assembly comprising a device (1) according to any of claims 1 to 7 or an assembly according to claims 8-9, **characterized in that** it comprises a background (5) that is perpendicular to the floor (3) on which the base (11) rests and which is placed at a distance from the device (1) and designed to be opposite photographing or filming means (4), wherein the background is white in color.

11. An assembly according to the preceding claim, **characterized in that** the height of the long body (10) is adapted so that no part of the floor appears in the frame of the image, in view of the angle of that image and the distance between the platform (12) and the white background.

12. An assembly according to claim 9, **characterized in that** the interface part (8) has a surface that is at least equal to the projection of the platform (12) on a plane that is co-planar with the base.

13. An assembly according to claims 9 to 12, **characterized in that** it comprises several devices (1), in particular a base (10) that is placed near each contact surface of the object or objects that are to rest on a horizontal plane.

14. Use of the device or assembly according to any of the preceding claims, with photographing or filming means, in a light box or a photography studio.
